# EUROPEAN PATENT APPLICATION

(11) **EP 4 610 384 A1**
(43) Date of publication of application: **03.09.2025**
(21) Application number: 23907481.8
(22) Date of filing: 28.11.2023
(51) Int. Cl.: C22C 38/34, C22C 38/24, C22C 38/00, B21B 1/16, C21D 1/18, C21D 8/06, C21D 8/04, C21D 9/02

(54) **STEEL WIRE FOR SPRING HAVING EXCELLENT COLD FORMABILITY AND MANUFACTURING METHOD THEREFOR**

(30) Priority: 21.12.2022 KR 20220181048
(71) Applicant: POSCO Co., Ltd, Pohang-si, Gyeongsangbuk-do 37859 (KR)
(72) Inventor: CHUN, Youngsoo, Pohang-si Gyeongsangbuk-do 37669 (KR); ROH, Jungpyo, Pohang-si Gyeongsangbuk-do 37878 (KR); JEONG, Munho, Pohang-si Gyeongsangbuk-do 37917 (KR); JUNG, Junyoung, Pohang-si Gyeongsangbuk-do 37878 (KR); JEON, Woobin, Pohang-si Gyeongsangbuk-do 37814 (KR)
(74) Representative: Nederlandsch Octrooibureau
(86) International application number: PCT/KR2023/019373
(87) International publication number: WO 2024/136195

(57) **Abstract**

A steel wire for a spring, having excellent cold formability, according to an embodiment of the present invention, comprises, by weight %, 0.60 to 0.66% of C, 1.40 to 1.65% of Si, 0.50 to 0.70% of Mn, 0.50 to 0.80% of Cr, 0.10 to 0.20% of V, 0.020% or less of P, 0.020% or less of S, 0.007% or less of N, and the remainder of Fe and other unavoidable impurities, wherein a microstructure has, by area%, 90-95% of tempered martensite and 5-10% of the remaining austenite, and the average aspect ratio of Fe-based carbide precipitated during tempering is 1:3 to 1:7.

## Description

### [Technical Field]

The present invention relates to a steel wire for a spring having excellent cold formability that may be used for applications to trunk opening/closing springs, manufacturing method therefor.

### [Background Art]

With the increasing demand for vehicle convenience features, the use of springs for automatic trunk opening and closing is increasing. Trunk springs or tailgate springs are compression springs used in actuators for automatic opening and closing of vehicle doors. Since these trunk springs do not require high fatigue strength and lifespan compared to conventional vehicle engine valve opening and closing springs, cold-drawn high-carbon cold-drawn steel wires are usually used.

However, as the need to reduce energy consumption increases with the shift toward electric vehicles, there is a growing demand for high-strength spring materials, and accordingly, the use of OT heat-treated steel wires (oil quenched and tempered wire, OT-wire) that may implement higher strength than cold-drawn springs are being pursued.

In order to improve the formability of OT heat-treated steel wire, Korean Patent Application No. 10-2014-7032284 (2013.05.20) titled "High-strength steel wire for a spring having excellent coiling performance and hydrogen embrittlement resistance and manufacturing method therefor" discloses utilizing a certain fraction of retained austenite and grain refinement. On the other hand, the corresponding invention is applicable to a product with a relatively low strength level of around 1.9 GPa. In addition, for ultra-high strength steels level of around 2.2 GPa, carbides of V, W, and Mo have conventionally been used, and commercialized in springs for opening and closing engine and transmission valves. However, the use of large amounts of such relatively expensive carbide elements may reduce price competitiveness. Therefore, there is a need to development technologies that optimize the amount of carbide elements and the fatigue life, and provide a spring steel wire for a spring and a manufacturing method corresponding thereto.

### [Disclosure]

### [Technical Problem]

To resolve the above-described issues, the present invention is directed to providing a steel wire for a spring having excellent cold formability and a method of manufacturing the same by controlling the alloy composition, microstructure, and manufacturing process.

The technical objectives of the present invention are not limited to the above, and other objectives that are not described above will be clearly understood by those skilled in the art from the above detailed description.

### [Technical Solution]

A steel wire for a spring having excellent cold formability according to an embodiment may include, in percent by weight (wt%), 0.60 to 0.66% of C, 1.40 to 1.65% of Si, 0.50 to 0.70% of Mn, 0.50 to 0.80% of Cr, 0.10 to 0.20% of V, 0.020% or less of P, 0.020% or less of S, 0.007% or less of N, and the remainder of Fe and inevitable impurities, and a microstructure thereof may include, in an area fraction, 90% or more and 95% or less of tempered martensite and 5% or more and 10% or less of retained austenite, and precipitated Fe-based carbides may have an average aspect ratio of 1:3 or more and 1:7 or less.

The steel wire for a spring having excellent cold formability according to an embodiment may have Fe-based carbides precipitated at prior austenite grain boundaries, of which an aspect ratio may be 1:5 or greater and 1:15 or less.

The steel wire for a spring having excellent cold formability according to an embodiment may have a tensile strength of 2.2 GPa or more.

The steel wire for a spring having excellent cold formability according to an embodiment may have a cross-sectional reduction of 40% or more.

A method of manufacturing a steel wire for a spring having excellent cold formability according to an embodiment may include: preparing a wire rod comprising in percent by weight (wt%), 0.60 to 0.66% of C, 1.40 to 1.65% of Si, 0.50 to 0.70% of Mn, 0.50 to 0.80% of Cr, 0.10 to 0.20% of V, 0.020% or less of P, 0.020% or less of S, 0.007% or less of N, and the remainder of Fe and inevitable impurities; drawing the wire rod at room temperature with a cross-sectional reduction of 82 to 87% to produce a steel wire; reheating the steel wire to a temperature of 900 to 970°C for 30 to 120 seconds and then quenching the reheated steel wire at a temperature of 30 to 90°C; and tempering the quenched steel wire at a temperature of 420 to 450°C for 30 to 500 seconds.

The method of manufacturing a steel wire for a spring having excellent cold formability according to an embodiment may include controlling Fe-based carbides precipitated in the tempering to have an average aspect ratio of 1:3 or more and 1:7 or less.

The method of manufacturing a steel wire for a spring having excellent cold formability according to an embodiment may include controlling Fe-based carbides precipitated at prior austenite grain boundaries in the tempering to have an aspect ratio of 1:5 or greater and 1:15 or less.

### [Advantageous Effects]

According to an embodiment of the present invention, it is possible to provide a steel wire for a spring having excellent cold formability capable of ensuring a high strength of 2.2 GPa or more and fatigue life, and a method of manufacturing the same.

### [Modes of the Invention]

Hereinafter, examples of the present invention will be described in detail with reference to the accompanying drawings. The following examples are provided to fully convey the spirit of the present invention to a person having ordinary skill in the art to which the present invention belongs. The present invention is not limited to the examples shown herein but may be embodied in other forms. In order to make the description of the present invention clear, unrelated parts are not shown and, the sizes of components are exaggerated for clarity.

Throughout the specification, when a part is referred to as "including", "comprising" and/or "having" a certain element, it is understood that, unless expressed otherwise, the description does not preclude the presence or addition of one or more elements.

The singular form of a noun corresponding to an item may include one or a plurality of the items unless clearly indicated otherwise in a related context.

Hereinafter, the reason for numerically limiting the alloy element contents in the embodiments of the present invention will be described. Unless otherwise specified, the units thereof are expressed in weight percent (wt%).

A steel wire for a spring having excellent cold formability according to an embodiment may include, in percent by weight (wt%), 0.60 to 0.66% of C, 1.40 to 1.65% of Si, 0.50 to 0.70% of Mn, 0.50 to 0.80% of Cr, 0.10 to 0.20% of V, 0.020% or less of P, 0.020% or less of S, 0.007% or less of N, and the remainder of Fe and inevitable impurities,

The content of C (carbon) may be 0.60 to 0.66%.

C is an element effective for increasing strength by solid solution strengthening. Considering this, C may be added in an amount of 0.60% or more. However, when the C content exceeds 0.66%, the toughness may decrease, leading to a degradation in spring formability.

The content of Si (silicon) may be 1.40 to 1.65%.

Si may be used for deoxidizing steel, and suppressing the growth of carbides during tempering, enabling an increase in tempering temperature. When the tempering temperature increases, the aspect ratio of Fe-based carbides may be reduced at the target strength, and the precipitation of Fe-based carbides at prior austenite grain boundaries may be suppressed, thereby suppressing brittle fracture (tempered martensite embrittlement) caused by carbides precipitated at prior austenite grain boundaries. When the Si content is less than 1.40%, it may be difficult to increase the tempering temperature, which may lead to reduced spring formability due to carbides having a large aspect ratio precipitated at the prior austenite grain boundaries, and when the Si content exceeds 1.65%, it may cause surface decarburization during the wire rod manufacturing process, thereby reducing fatigue strength.

The content of Mn (manganese) may be 0.50 to 0.70%.

Mn is an element that improves hardenability. When the content of Mn is 0.50% or more, an appropriate fraction of retained austenite is ensured, providing improved hydrogen embrittlement resistance, and when the content of Mn exceeds 0.70%, the spring formability may become inferior due to non-dissolution of carbides in segregation bands.

The content of Cr (chromium) may be 0.50 to 0.80%.

Cr is an effective element for ensuring strength by improving hardenability. In addition, similar to Si, Cr plays a role in suppressing carbide growth during tempering. Considering this, Cr may be added in an amount of 0.50% or more. However, when the content of Cr exceeds 0.80%, the spring formability may become inferior due to non-dissolution of carbides in the segregation bands.

The content of vanadium (V) may be 0.10 to 0.20%.

V is a V-based precipitation hardening carbide element. When the content of V is less than 0.10%, the precipitation hardening effect becomes insufficient, making it difficult to achieve the target strength, and when the content of V exceeds 0.20%, coarse V-based carbonitride may form, which may lead to degradation in spring formability.

The content of P (phosphorus) may be 0.020% or less (excluding 0%).

P is an element that may segregate at grain boundaries and reduce formability. Considering this, the content of P may be limited to 0.020% or less.

The content of sulfur (S) may be 0.020% or less (excluding 0%).

Similar to P, S is an element that not only segregates at grain boundaries and reduces formability, but also forms low-melting-point sulfides and reduces hot-rollability. Therefore, the content of S may be limited to 0.020%.

The content of nitrogen (N) may be 0.007% or less.

N combines with V added to the steel to form V-based carbonitride. When the nitrogen content is controlled at 0.007% or less, the manufacturing cost may be reduced, and when the the nitrogen content exceeds 0.007%, coarse carbonitrides may be formed, which may lead to poor impact toughness.

The remaining component(s) of the disclosed invention is iron (Fe). However, unintended impurities may inevitably be introduced from raw materials or the surrounding environment in a typical manufacturing process, and thus cannot be excluded. Since such impurities may be well known to those skilled in the art of conventional manufacturing processes, details thereof are not described in this specification.

A steel wire for a spring having excellent cold formability according to an embodiment may have a microstructure including, in area fraction, 90% or more and 95% or less of tempered martensite and retained austenite 5% or more and 10% or less of retained austenite.

When the area fraction of the retained austenite is 5% or more, the sensitivity to hydrogen is lowered, resulting in improved resistance to hydrogen embrittlement. When the area fraction of the retained austenite exceeds 10%, the durability of the spring may be degraded due to the strain-induced martensite formed during spring forming.

**In** the steel wire for a spring having excellent cold formability according to an embodiment, Fe-based carbides precipitated during tempering may have an average aspect ratio of 1:3 or greater and 1:7 or less.

When the average aspect ratio of Fe-based carbides precipitated during tempering is 1:3 or greater, a tensile strength of 2.2 GPa or more, as targeted in the present invention, may be implemented, and when the average aspect ratio exceeds 1:7, sufficient tempering may not occur, which may lead to degradation in spring formability.

In addition, in the steel wire for a spring having excellent cold formability according to an embodiment, Fe-based carbides precipitated at prior austenite grain boundaries may have an aspect ratio of 1:5 or greater and 1:15 or less.

In the case of the prior austenitic grain boundaries, film-like carbides are precipitated along the grain boundaries. When the aspect ratio of the carbides precipitated at the grain boundaries is 1:5 or greater, high strength may be ensured due to the precipitation strengthening effect of the carbides. However, when the aspect ratio exceeds 1:15, the spring formability may be degraded.

In addition, the steel wire for a spring having excellent cold formability according to an embodiment has a tensile strength of 2.2 GPa or more.

In addition, the steel wire for a spring having excellent cold formability according to an embodiment may have a cross-sectional reduction of 40% or more.

A method of manufacturing a steel wire for a spring having excellent cold formability according to an embodiment may include: preparing a wire rod comprising in percent by weight (wt%), 0.60 to 0.66% of C, 1.40 to 1.65% of Si, 0.50 to 0.70% of Mn, 0.50 to 0.80% of Cr, 0.10 to 0.20% of V, 0.020% or less of P, 0.020% or less of S, 0.007% or less of N, and the remainder of Fe and inevitable impurities;
drawing the wire rod at room temperature with a cross-sectional reduction of 82 to 87% to produce a steel wire; reheating the steel wire to a temperature of 900 to 970°C for 30 to 120 seconds and then quenching the reheated steel wire at a temperature of 30 to 90°C; and tempering the quenched steel wire at a temperature of 420 to 450°C for 30 to 500 seconds.

Hereinafter, each manufacturing operation is described in more detail.

After preparing a wire rod satisfying the above described alloy composition, processes of producing a steel wire by drawing, reheating, quenching, and tempering may be performed.

First, a wire rod satisfying the above described alloy composition may be prepared. The reasons for numerically limiting the component range of each alloy composition are as described above.

In the producing of the steel wire, the wire rod may be drawn at room temperature with a cross-sectional reduction of 82~87% to produce the steel wire.

When the cross-sectional reduction of the wire rod during drawing is less than 82%, the amount of drawing is insufficient, resulting in a small prior austenite grain size, and thus the steel wire for a spring according to the present invention may not satisfy a cross-sectional reduction of 40% or more for the desired spring formability. In addition, when the cross-sectional reduction of the wire rod during drawing exceeds 87%, the limit of drawability is exceeded, causing central cracking occurs during the drawing process, and as a result, the final steel wire for a spring according to the present invention may not satisfy a cross-sectional reduction of 40% or more that is targeted in the present invention.

The reheating and then quenching includes reheating the steel wire at a temperature of 900 to 970°C for 30 to 120 seconds, followed by quenching at a temperature of 30 to 90°C.

When the reheating temperature is less than 900°C or the reheating time is less than 30 seconds, the reverse transformation to austenite in the microstructure of the steel wire is not complete, and undissolved pearlite may be present, which causes the steel wire for a spring according to the present invention to fail to satisfy the target cross-sectional reduction of 40% or more. When the reheating temperature exceeds 970°C or the reheating time exceeds 120 seconds, the prior austenite grain size increases, resulting in poor ductility, and the steel wire for a spring according to the present invention may fail to satisfy the target cross-sectional reduction of 40% or more.

In addition, when the quenching temperature is 30°C or higher, quenching cracks may be prevented due to rapid volume change during martensite transformation, and when the quenching temperature exceeds 90°C, the cooling speed is not fast, resulting in the retained austenite fraction exceeding 10%.

The quenched wire rod may be tempered at a temperature of 420~450°C, which is different from conventional tempering temperatures. In this case, the tempering time may be preferably set to 30 to 500 seconds. When the tempering is performed for 30 seconds or longer, tensile residual stress on the surface is sufficiently relieved, which may improve the fatigue strength, and when the tempering time exceeds 500 seconds, there is no change in the tempering effect, which causes cost issues.

**In** addition, when the tempering temperature is less than 420°C, the average aspect ratio of Fe-based carbides in the steel wire exceeds 1:7, and the aspect ratio of Fe-based carbides precipitated along the prior austenite grain boundaries exceeds 1:15, resulting in poor spring formability. When the tempering temperature is excessively high, the average aspect ratio of Fe-based carbides becomes less than 1:3, approaching a spherical shape, and the aspect ratio of Fe-based carbides precipitated along the prior austenite grain boundaries becomes less than 1:5, making it difficult to achieve the tensile strength of 2.2 GPa or more, which is the targeted for the steel wire for a spring according to the present invention. The upper limit of the tempering temperature may vary depending on Si, Cr, and V added, but may preferably be 450°C or less.

Hereinafter, the present invention will be described in more detail through embodiments. However, the descriptions of the embodiments are only for illustrating the implementation of the present invention, and the present invention is not limited by the descriptions of the embodiments. This is because the scope of the rights of the present invention is determined by matters described in the scope of claims and matters reasonably inferred therefrom.

### {Examples}

For the various alloy composition ranges shown in Table 1 below, ingots were produced in a vacuum induction melting furnace. The prepared ingots were subjected to solution heat treatment at 1200°C for 4 hours in a heating furnace to remove the cast structure. Thereafter, in order to produce the ingots into wire rods, welding was performed on a rear end of 10-meter-long billets. The welded ingots were then finish-rolled into wire rods with a diameter of 9 mm. Next, the wire rods were drawn with a drawing reduction as shown in Table 2 to produce cold-drawn steel wires, and then reheating was performed for 68 to 70 seconds at the reheating temperature shown in Table 3 below, and then quenching was performed in oil at a temperature of 55 to 70°C. The quenched steel wires were heat treated for 105 to 110 seconds at the tempering temperatures shown in Table 3 below.

Thereafter, the microstructure of the heat-treated steel wires was then analyzed.

The fraction of retained austenite was obtained through phase analysis using electron backscatter diffraction (EBSD), and images were taken five times at a magnification of x 1,500, and the average value was recorded. Confidence indices of 0.1 or less were treated as errors to increase reliability.

The aspect ratio of Fe-based carbides was observed by preparing a 3 mm disc-shaped TEM sample. Photographs were taken at a magnification of x 160,000 in ten random regions per specimen, and the average aspect ratio of all Fe-based carbides in the grain interiors and the grain boundaries was measured using an image analyzer. The aspect ratio of precipitates at prior austenite grain boundaries was measured by locating the prior austenite grain boundaries and performing three measurements at a magnification of x 160,000, and the average value was recorded.

The tensile test was performed by cutting the heat-treated material into 300 mm lengths and performing a tensile test in the original cylinder form. The material was gripped 100 mm from both ends, and the tensile test was performed at a speed of 10 mm/min.

Table 3 shows the heat treatment temperature, the fraction of retained austenite in the microstructure of the steel wire, and the result of the tensile test.

**[Table 1]**

| | C | Si | Mn | Cr | V | P | S | N |
|---|---|---|---|---|---|---|---|---|
| Inventive Example 1 | 0.60 | 1.40 | 0.54 | 0.55 | 0.13 | 0.011 | 0.004 | 0.004 |
| Inventive Example 2 | 0.63 | 1.51 | 0.61 | 0.64 | 0.13 | 0.010 | 0.004 | 0.004 |
| Inventive Example 3 | 0.66 | 1.65 | 0.70 | 0.80 | 0.14 | 0.011 | 0.004 | 0.004 |
| Inventive | 0.65 | 1.62 | 0.64 | 0.70 | 0.19 | 0.011 | 0.004 | 0.004 |
| Example 4 | | | | | | | | |
| Comparative Example 1 | 0.67 | 1.49 | 0.60 | 0.57 | 0.12 | 0.009 | 0.004 | 0.004 |
| Comparative Example 2 | 0.59 | 1.50 | 0.59 | 0.54 | 0.14 | 0.010 | 0.004 | 0.004 |
| Comparative Example 3 | 0.62 | 1.37 | 0.60 | 0.61 | 0.14 | 0.012 | 0.005 | 0.004 |
| Comparative Example 4 | 0.63 | 1.67 | 0.61 | 0.59 | 0.12 | 0.010 | 0.004 | 0.004 |
| Comparative Example 5 | 0.64 | 1.50 | 0.48 | 0.61 | 0.12 | 0.011 | 0.004 | 0.004 |
| Comparative Example 6 | 0.63 | 1.48 | 0.75 | 0.50 | 0.13 | 0.010 | 0.005 | 0.004 |
| Comparative Example 7 | 0.62 | 1.51 | 0.62 | 0.47 | 0.12 | 0.010 | 0.004 | 0.004 |
| Comparative Example 8 | 0.64 | 1.47 | 0.61 | 0.83 | 0.11 | 0.012 | 0.005 | 0.004 |
| Comparative Example 9 | 0.62 | 1.47 | 0.56 | 0.61 | 0.24 | 0.011 | 0.004 | 0.004 |
| Comparative Example 10 | 0.63 | 1.51 | 0.61 | 0.64 | 0.13 | 0.010 | 0.004 | 0.004 |
| Comparative Example 11 | 0.63 | 1.51 | 0.61 | 0.64 | 0.13 | 0.010 | 0.004 | 0.004 |
| Comparative Example 12 | 0.63 | 1.51 | 0.61 | 0.64 | 0.13 | 0.010 | 0.004 | 0.004 |
| Comparative Example 13 | 0.64 | 1.55 | 0.62 | 0.72 | 0.14 | 0.010 | 0.004 | 0.004 |
| Comparative | 0.63 | 1.51 | 0.61 | 0.64 | 0.13 | 0.010 | 0.004 | 0.004 |
| Example 14 | | | | | | | | |
| Comparative Example 15 | 0.63 | 1.51 | 0.61 | 0.64 | 0.13 | 0.010 | 0.004 | 0.004 |

**[Table 2]**

| | Cross-sectional reduction (%) in drawing of wire rod |
|---|---|
| Inventive Example 1 | 83.1 |
| Inventive Example 2 | 83.1 |
| Inventive Example 3 | 83.1 |
| Inventive Example 4 | 83.1 |
| Comparative Example 1 | 83.1 |
| Comparative Example 2 | 83.1 |
| Comparative Example 3 | 83.1 |
| Comparative Example 4 | 83.1 |
| Comparative Example 5 | 83.1 |
| Comparative Example 6 | 83.1 |
| Comparative Example 7 | 83.1 |
| Comparative Example 8 | 83.1 |
| Comparative Example 9 | 83.1 |
| Comparative Example 10 | 83.1 |
| Comparative Example 11 | 83.1 |
| Comparative Example 12 | 83.1 |
| Comparative Example 13 | 83.1 |
| Comparative Example 14 | 87.4 |
| Comparative Example 15 | 81.2 |

**[Table 3]**

| | Reheating Temp. (°C) | Tempering Temp. (°C) | Temp ered marte nsite fracti on (%) | Retained austenite fraction (%) | Aspect ratio of Fe carbide | | Tensile strength (GPa) | Cros s-secti onal redu ctio n (%) |
|---|---|---|---|---|---|---|---|---|
| | | | | | Average | Grain bounda ry (prior austenit e) | | |
| Inventive Example 1 | 909 | 421 | 95.0 | 5.0 | 1:7 | 1:15 | 2.22 | 49 |
| Inventive Example 2 | 922 | 430 | 93.3 | 6.7 | 1:5 | 1:13 | 2.24 | 47 |
| Inventive Example 3 | 945 | 441 | 91.1 | 8.9 | 1:3 | 1:10 | 2.23 | 42 |
| Inventive Example 4 | 969 | 439 | 92.9 | 7.1 | 1:4 | 1:11 | 2.25 | 47 |
| Comparativ e Example 1 | 931 | 432 | **89.9** | **10.1** | 1:5 | 1:13 | 2.25 | **38** |
| Comparativ e Example 2 | 931 | 432 | **95.1** | **4.9** | 1:4 | 1:10 | **2.13** | **44** |
| Comparativ e Example 3 | 931 | 432 | 93.8 | 6.2 | **1:2** | 1:9 | **1.91** | 49 |
| Comparativ e Example 4 | 931 | 432 | 93.2 | 6.8 | **1:8** | **1:16** | 2.25 | **36** |
| Comparativ e Example 5 | 931 | 432 | **96.0** | **4.0** | 1:6 | 1:11 | 2.20 | **39** |
| Comparativ e Example 6 | 931 | 432 | **89.1** | **10.9** | 1:6 | 1:11 | 2.21 | **39** |
| Comparativ e Example 7 | 931 | 432 | **95.1** | **4.9** | 1:4 | 1:9 | **2.19** | 40 |
| Comparativ e Example 8 | 931 | 432 | **88.8** | **11.2** | 1:6 | 1:13 | 2.24 | **38** |
| Comparativ e Example 9 | 931 | 432 | 92.9 | 7.1 | 1:6 | 1:12 | 2.26 | **37** |
| Comparativ e Example 10 | **895** | 432 | 90.1 | 9.9 | 1:5 | 1:13 | 2.21 | **35** |
| Comparativ e Example 11 | **973** | 432 | 94.9 | 5.1 | 1:5 | 1:13 | 2.23 | **39** |
| Comparativ e Example 12 | 931 | **417** | 93.4 | 6.6 | **1:8** | **1:16** | 2.33 | **39** |
| Comparativ e Example 13 | 940 | **418** | 92.1 | 7.9 | 1:7 | **1:16** | 2.31 | **39** |
| Comparativ e Example 14 | 921 | 429 | 94.1 | 5.9 | 1:5 | 1:13 | 2.23 | **29** |
| Comparativ e Example 15 | 920 | 420 | 92.7 | 7.3 | 1:7 | 1:12 | **2.18** | **41** |

Inventive Example s 1 to 4 may produce a steel wire for a springs manufactured according to the alloy composition of Table 1 and the heat treatment conditions of Table 2, in which the steel wire include, in an area fraction, 90% or more and 95% or less of tempered martensite and 5% or more and 10% or less of retained austenite, Fe-based carbides satisfy an average aspect ratio of 1:3 or more and 1:7 or less, and Fe-based carbides precipitated at prior austenite grain boundaries satisfy an aspect ratio of 1:5 or greater and 1:15 or less, thereby satisfying a tensile strength of 2.2 GPa or more and a cross-sectional reduction of 40% or more.

Comparative Example 1 had a C content exceeding 0.66% and a retained austenite fraction exceeding 10%, and thus had a cross-sectional reduction of 38%, which did not satisfy 40% or more. In other words, Comparative Example 1 had an inferior cross-sectional reduction.

Comparative Example 2 had a C content of less than 0.60% and a retained austenite fraction of 4.9%, which did not satisfy the range of 5 to 10%, and showed an inferior tensile strength of 2.13 GPa.

Comparative Example 3 had a Si content of less than 1.40% and an average aspect ratio of Fe-based carbides of 1:2, which did not satisfy 1:3 to 1:7, and thus showed an inferior tensile strength of 1.91 GPa.

Comparative Example 4 had a Si content exceeding 1.65% and an average aspect ratio of Fe-based carbides of 1:8, which did not satisfy 1:3 to 1:7, and thus showed inferior spring formability due to a low cross-sectional reduction of 36%.

Comparative Examples 5 and 6 did not satisfy the Mn content according to the present invention, and thus did not satisfy the retained austenite fraction, and thus showed inferior cross-sectional reductions.

Comparative Example 7 had a Cr content of less than 0.50% and a retained austenite fraction of 4.9%, resulting in a poor tensile strength of 2.19 GPa.

Comparative Example 8 had a Cr content exceeding 0.80% and a retained austenite fraction exceeding 10%, resulting in a cross-sectional reduction of 38%, indicating poor spring formability.

Comparative Example 9 had a V content exceeding 0.20%, leading to the formation of coarse vanadium carbonitride, which reduced ductility, resulting in a poor cross-sectional reduction.

Comparative Example 10 had a reheating temperature of less than 900°C, resulting in undissolved pearlite, which lead to a decrease in the cross-sectional reduction, yielding a poor cross-sectional reduction of 35%.

Comparative Example 11 had 973°C exceeding 970°C, leading to coarsening of prior austenite grain size and a poor cross-sectional reduction of 39%.

Comparative Examples 12 and 13 had tempering temperatures of less than 420°C, and in the case of Comparative Example 12, the aspect ratio of Fe-based carbides was 1:8, which did not satisfy 1:3 or more but 1:7, and in the case of Comparative Example 13, the aspect ratio of Fe-based carbides precipitated in the prior austenite grain boundaries exceeded 1:15, and in both cases, the cross-sectional reductions were inferior at 39%.

Comparative Example 14 had a drawing amount exceeding 87%, which caused internal cracks during drawing, resulting in a poor cross-sectional reduction of the steel wire.

Comparative Example 15 was processed with a drawing amount of less than 82%, and failed to ensure the strength of the heat-treated steel wire.

## Claims

1. A steel wire for a spring having excellent cold formability, comprising in percent by weight (wt%),
0.60 to 0.66% of C, 1.40 to 1.65% of Si, 0.50 to 0.70% of Mn, 0.50 to 0.80% of Cr, 0.10 to 0.20% of V, 0.020% or less of P, 0.020% or less of S, 0.007% or less of N, and the remainder of Fe and inevitable impurities,
wherein a microstructure thereof includes, in an area fraction, 90% or more and 95% or less of tempered martensite and 5% or more and 10% or less of retained austenite, and
precipitated Fe-based carbides have an average aspect ratio of 1:3 or more and 1:7 or less.

2. The steel wire for a spring having excellent cold formability of claim 1, wherein Fe-based carbides precipitated at prior austenite grain boundaries have an aspect ratio of 1:5 or greater and 1:15 or less.

3. The steel wire for a spring having excellent cold formability of claim 1, having a tensile strength of 2.2 GPa or more.

4. The steel wire for a spring having excellent cold formability of claim 1, having a cross-sectional reduction of 40% or more.

5. A method of manufacturing a steel wire for a spring having excellent cold formability, the method comprising:
preparing a wire rod comprising in percent by weight (wt%), 0.60 to 0.66% of C, 1.40 to 1.65% of Si, 0.50 to 0.70% of Mn, 0.50 to 0.80% of Cr, 0.10 to 0.20% of V, 0.020% or less of P, 0.020% or less of S, 0.007% or less of N, and the remainder of Fe and inevitable impurities;
drawing the wire rod at room temperature with a cross-sectional reduction of 82 to 87% to produce a steel wire;
reheating the steel wire to a temperature of 900 to 970°C for 30 to 120 seconds and then quenching the reheated steel wire at a temperature of 30 to 90°C; and
tempering the quenched steel wire at a temperature of 420 to 450°C for 30 to 500 seconds.

6. The method of claim 5, wherein Fe-based carbides precipitated in the tempering are controlled to have an average aspect ratio of 1:3 or more and 1:7 or less.

7. The method of claim 5, wherein Fe-based carbides precipitated at prior austenite grain boundaries in the tempering are controlled to have an aspect ratio of 1:5 or greater and 1:15 or less.
